# EUROPEAN PATENT APPLICATION

(11) **EP 3 467 729 A1**
(43) Date of publication of application: **10.04.2019**
(21) Application number: 18198522.7
(22) Date of filing: 03.10.2018
(51) Int. Cl.: G06Q 10/04, G08G 5/00

(54) **SYSTEMS AND METHODS FOR CONTINUOUSLY PROVIDING OPERATIONAL-EFFICIENCY DATA IN REAL-TIME ONBOARD AN AIRCRAFT**

(30) Priority: 06.10.2017 US 201715726783
(71) Applicant: Honeywell International Inc., Morris Plains, NJ New Jersey 07950 (US)
(72) Inventor: KHAN, Kalimulla, Morris Plains, NJ New Jersey 07950 (US); JAYATHIRTHA, Srihari, Morris Plains, NJ New Jersey 07950 (US); KIROV, Chavdar, Morris Plains, NJ New Jersey 07950 (US)
(74) Representative: Sach, Greg Robert

(57) **Abstract**

A method for providing operational-efficiency data onboard an aircraft associated with a current flight plan. Prior to flight of the aircraft using the current flight plan, the method obtains and presents pre-flight briefing data, flight advisories, and stored alerts associated with the current flight plan, wherein the pre-flight briefing data comprises at least an operational-efficiency KPI associated with the current flight plan. The method also determines applicability of the operational-efficiency KPI to the current flight plan, based on the pre-flight briefing data, flight plan data, weather data, NOTAM data, and ATC communication data. When the operational-efficiency KPI is applicable to the current flight plan, the method computes and presents fuel savings associated with adherence to the operational-efficiency KPI during the flight; and configures and presents alerts associated with adherence to the operational-efficiency KPI during the flight.

## Description

### TECHNICAL FIELD

Embodiments of the subject matter described herein relate generally to providing operational-efficiency data, continuously and in real-time, during flight onboard an aircraft. More particularly, embodiments of the subject matter relate to providing operational-efficiency data associated with Key Performance Indicators (KPI) onboard the aircraft.

### BACKGROUND

Operational costs for an aircraft may include fuel costs, aircraft maintenance costs, costs due to flight delays, and the like. Typically, such operational costs may be reduced by analyzing operational trends, historical data, fuel usage data, fuel cost data, and past flight data, and determining causes of excess operational cost for previous flights. However, the analysis of past information associated with previous flights provides insight which is available for, and may be applied to, future flights.

Accordingly, it is desirable to provide operational-efficiency data during a flight, such that a flight crew may make decisions related to operational-efficiency during completion of the current flight plan. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a method for providing operational-efficiency data onboard an aircraft associated with a current flight plan. Prior to flight of the aircraft using the current flight plan, the method obtains and presents pre-flight briefing data, flight advisories, and stored alerts associated with the current flight plan, by a processor of a computing device onboard the aircraft, wherein the pre-flight briefing data comprises at least an operational-efficiency Key Performance Indicator (KPI) associated with the current flight plan, wherein the operational-efficiency KPI provides recommended action items for a flight crew to improve operational-efficiency for the current flight plan, and wherein the operational-efficiency includes at least fuel-efficiency, reducing aircraft maintenance, reducing gate delays, and reducing carbon dioxide emissions. The method then determines applicability of the operational-efficiency KPI to the current flight plan, based on the pre-flight briefing data, flight plan data, weather data, Notice to Airmen (NOTAM) data, and Air Traffic Control (ATC) communication data. When the operational-efficiency KPI is applicable to the current flight plan, the method computes and presents fuel savings associated with adherence to the operational-efficiency KPI during the flight; and configures and presents alerts associated with adherence to the operational-efficiency KPI during the flight.

Some embodiments of the present disclosure provide a computing device onboard an aircraft associated with a current flight plan. The computing device includes: a system memory element configured to store a database of operational-efficiency Key Performance Indicators (KPIs) received from existing fuel-efficiency software; a display device configured to present text and graphical elements for user viewing; and at least one processor, communicatively coupled to the system memory element and the display device. Prior to flight of the aircraft using the current flight plan, the at least one processor is configured to: obtain and present pre-flight briefing data, flight advisories, and stored alerts associated with the current flight plan, wherein the pre-flight briefing data comprises at least an operational-efficiency Key Performance Indicator (KPI) associated with the current flight plan, wherein the operational-efficiency KPI provides recommended action items for a flight crew to improve operational-efficiency for the current flight plan, and wherein the operational-efficiency includes at least fuel-efficiency, reducing aircraft maintenance, reducing gate delays, and reducing carbon dioxide emissions; and determine applicability of the operational-efficiency KPI to the current flight plan, based on the pre-flight briefing data, flight plan data, weather data, Notice to Airmen (NOTAM) data, and Air Traffic Control (ATC) communication data. When the operational-efficiency KPI is applicable to the current flight plan, the at least one processor is further configured to compute and present fuel savings associated with adherence to the operational-efficiency KPI during the flight; and configure and present alerts associated with adherence to the operational-efficiency KPI during the flight.

Some embodiments of the present disclosure provide a non-transitory, computer-readable medium containing instructions thereon, which, when executed by a processor, perform a method for providing operational-efficiency data onboard an aircraft associated with a current flight plan. Prior to flight of the aircraft using the current flight plan, the method obtains and presents pre-flight briefing data comprising at least an operational-efficiency Key Performance Indicator (KPI), flight advisories, and stored alerts associated with the current flight plan, by a processor of a computing device onboard the aircraft, by: obtaining candidate operational-efficiency KPIs that are potentially associated with the current flight plan, by the processor, wherein the operational-efficiency KPIs provide recommended action items for a flight crew to improve operational-efficiency for the flight plan, and wherein the operational-efficiency includes at least fuel-efficiency, reducing aircraft maintenance, reducing gate delays, and reducing carbon dioxide emissions; and evaluating the candidate operational-efficiency KPIs to identify the operational-efficiency KPI applicable to the current flight plan, by the processor, wherein applicability to the current flight plan is indicated by a comparison of KPI conditions associated with each of the candidate operational-efficiency KPIs to a current aircraft state, a current route, and current environmental conditions and thresholds. The method then determines applicability of the operational-efficiency KPI to the current flight plan, based on the pre-flight briefing data, flight plan data, weather data, Notice to Airmen (NOTAM) data, and Air Traffic Control (ATC) communication data. When the operational-efficiency KPI is applicable to the current flight plan, the method computes and presents fuel savings associated with adherence to the operational-efficiency KPI during the flight; and configures and presents alerts associated with adherence to the operational-efficiency KPI during the flight.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a diagram of a system for providing operational-efficiency data onboard an aircraft, in accordance with the disclosed embodiments;
FIG. 2 is a functional block diagram of a computing device, in accordance with the disclosed embodiments;
FIG. 3 is a flow chart that illustrates an embodiment of a process for providing operational-efficiency data onboard an aircraft associated with a current flight plan prior to the flight of the aircraft;
FIG. 4 is a flow chart that illustrates an embodiment of a process for providing operational-efficiency data onboard an aircraft associated with a current flight plan during the flight of the aircraft;
FIG. 5 is a flow chart that illustrates an embodiment of a process for providing operational-efficiency data onboard an aircraft associated with a current flight plan after the flight of the aircraft;
FIG. 6 is a flow chart that illustrates an embodiment of a process for obtaining and presenting pre-flight briefing data, flight advisories, and alerts associated with a current flight plan, prior to the flight of the aircraft; and
FIG. 7 is a flow chart that illustrates an embodiment of a process for presenting historical analysis and reports associated with the current flight plan, after the flight of the aircraft.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to apparatus, systems, and methods for providing operational-efficiency data onboard an aircraft, such that the flight crew may use the operational-efficiency data for decision-making prior to the flight, during the flight, and after the flight. Generally, Key Performance Indicator (KPI) information is presented to the flight crew during the pre-flight briefing in the form of a report or bulletin, and the flight crew uses their own cognitive skills to identify the applicability of the KPIs and to take necessary steps to adhere to the recommendations presented by the KPIs. This lack of real-time information available to the flight crew leads to degraded compliance of the KPIs, thereby preventing the flight crew from achieving the full potential of adherence to the operational-efficiency KPIs. Contemplated herein is a mechanism to provide real-time, context-specific cues for the flight crew, with respect to the operational-efficiency KPIs. More specifically, the subject matter presented herein relates to the analysis of KPIs, as the KPIs relate to a current flight plan and data associated with the current flight plan (e.g., weather data, NOTAM data, route data), aircraft parameters and aircraft data (e.g., aircraft position, altitude, speed), and pre-flight briefing data, to determine the applicability of particular KPIs to the current flight. When a KPI is applicable, the fuel-efficiency data (e.g., fuel savings) is calculated based on adherence to the applicable KPI. Additionally, alerts are configured and set, based on adherence to the applicable KPI. As described herein, an aircraft onboard system (or computer system communicatively coupled to aircraft onboard systems) effectively manages operational-efficiency KPIs throughout a flight. The aircraft onboard system presents the operational-efficiency KPIs, receives flight crew input configurations of the KPIs and alerts associated with the KPIs, and analyzes historical flight data associated with the KPIs and KPI compliance.

Certain terminologies are used with regard to the various embodiments of the present disclosure. An operational-efficiency Key Performance Indicator (KPI) provides recommended action items for a flight crew to improve operational-efficiency for the current flight plan. Operational-efficiency indicates an increased level of effectiveness for KPI parameters, which may include at least increased fuel-efficiency (e.g., lower fuel requirements resulting in reduced fuel costs), reduced aircraft maintenance requirements, reduced gate delays, and reduced carbon dioxide emissions. Thus, when the recommended action items of the operational-efficiency KPI are completed by the flight crew, the operational-efficiency of the aircraft is increased. Examples of operational-efficiency KPIs may include, without limitation: delayed engine start; reduced engine taxi (i.e., engine out or single engine); optimum Standard Instrument Departure (SID); reduced flaps takeoff; optimum point for clean configuration after takeoff; acceleration altitude reduction; early/delayed landing gear retraction; change of cruise altitude; direct request and utilization; optimum Standard Arrival (STAR); reduced flap landing; optimum point for landing configuration; and idle reverse.

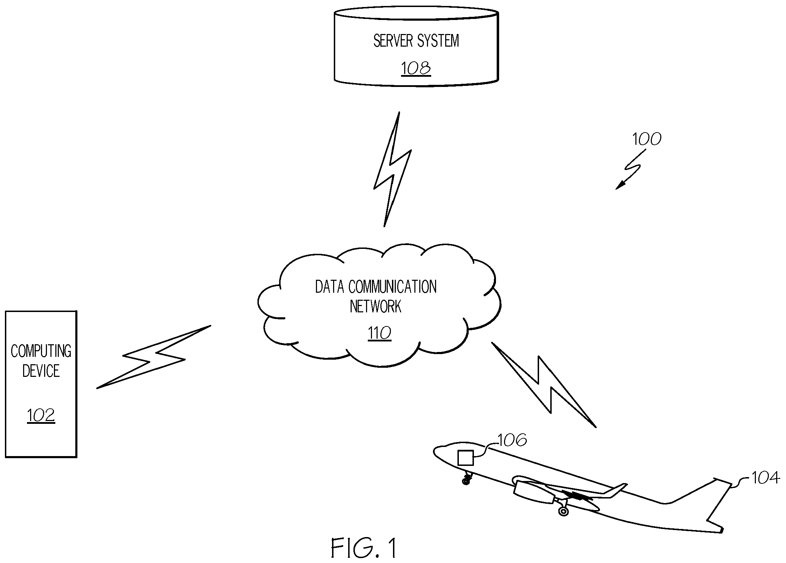

Turning now to the figures, FIG. 1 is a diagram of a system 100 for providing operational-efficiency data onboard an aircraft 104, in accordance with the disclosed embodiments. The system 100 operates to (i) detect applicability of particular Key Performance Indicators (KPIs) to a current flight plan prior to flight, during the flight, and after the flight, (ii) compute fuel savings and other operational-efficiency parameters when a particular KPI is applicable to the current flight plan, and (iii) configure alerts onboard the aircraft when the particular KPI is applicable to the current flight plan. The system 100 may include, without limitation, a computing device 102 that communicates with one or more avionics systems 106 onboard the aircraft 104 and at least one server system 108, via a data communication network 110. In practice, certain embodiments of the system 100 may include additional or alternative elements and components, as desired for the particular application.

The computing device 102 may be implemented by any computing device that includes at least one processor, some form of memory hardware, a user interface, and communication hardware. For example, the computing device 102 may be implemented using a personal computing device, such as a tablet computer, a laptop computer, a personal digital assistant (PDA), a smartphone, or the like. In this scenario, the computing device 102 is capable of storing, maintaining, and executing an Electronic Flight Bag (EFB) application configured to identify applicable KPIs for a current flight plan, to compute and present fuel savings associated with the applicable KPI, and to configure alerts associated with the applicable KPI. In other embodiments, the computing device 102 may be implemented using a computer system onboard the aircraft 104, which is configured to identify the applicable KPIs, compute fuel savings, and configure alerts for applicable KPIs.

The aircraft 104 may be any aviation vehicle for which KPIs are relevant and applicable during completion of a current flight plan. The aircraft 104 may be implemented as an airplane, helicopter, spacecraft, hovercraft, or the like. The one or more avionics systems 106 may include a Flight Management System (FMS), Automatic Dependent Surveillance - Broadcast (ADS-B) devices, Air Traffic Control (ATC) communication interface devices, navigation devices, weather radar, or the like. Data obtained from the one or more avionics systems 106 may include, without limitation: flight plan data, weather data, aircraft position data, aircraft altitude data, aircraft speed data, Notices to Airmen (NOTAM) data, aircraft performance data, or the like.

The server system 108 may include any number of application servers, and each server may be implemented using any suitable computer. In some embodiments, the server system 108 includes one or more dedicated computers. In some embodiments, the server system 108 includes one or more computers carrying out other functionality in addition to server operations. The server system 108 may store and provide any type of data used to identify KPIs applicable to a current flight plan, to calculate fuel savings associated with applicable KPIs, and to configure or set alerts associated with applicable KPIs. Such data may include, without limitation: flight plan data, Key Performance Indicator (KPI) data, weather data, aircraft parameter data for a particular type of aircraft, fuel cost data, aircraft maintenance data, airport gate delay data, aircraft emissions data, and other data compatible with the computing device 102.

The computing device 102 is usually located onboard the aircraft 104, and the computing device 102 communicates with the one or more avionics systems 106 via wired and/or wireless communication connection. The computing device 102 and the server system 108 are generally disparately located, and the computing device 102 communicates with the server system 108 via the data communication network 110 and/or via communication mechanisms onboard the aircraft 104.

The data communication network 110 may be any digital or other communications network capable of transmitting messages or data between devices, systems, or components. In certain embodiments, the data communication network 110 includes a packet switched network that facilitates packet-based data communication, addressing, and data routing. The packet switched network could be, for example, a wide area network, the Internet, or the like. In various embodiments, the data communication network 110 includes any number of public or private data connections, links or network connections supporting any number of communications protocols. The data communication network 110 may include the Internet, for example, or any other network based upon TCP/IP or other conventional protocols. In various embodiments, the data communication network 110 could also incorporate a wireless and/or wired telephone network, such as a cellular communications network for communicating with mobile phones, personal digital assistants, and/or the like. The data communication network 110 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating components of the systems) may not be described in detail herein.

During typical operation, the computing device 102 obtains relevant data associated with the aircraft 104, a current flight plan, and potentially applicable KPIs. The computing device 102 then uses the obtained data to identify applicable KPIs, to compute potential fuel savings when the aircraft 104 adheres to the recommendations provided by applicable KPIs, and to set alerts for the recommendations provided by the applicable KPIs. The computing device 102 also presents the computed fuel savings and KPI alerts such that a user (e.g., a flight crew member) may make flight decisions based on the presented recommendations. The computing device 102 is further configured to perform KPI analysis to identify applicable KPIs (and potential fuel savings based on the applicable KPIs), and to set the KPI alerts, (i) prior to flight (i.e., pre-flight), and (ii) continuously and dynamically during flight. Such dynamic, real-time calculation of applicable KPIs and fuel savings considers updated, real-time data which may alter previously-computed applicable KPIs, effects of adherence to the applicable KPIs, and fuel savings associated with adherence to applicable KPIs.

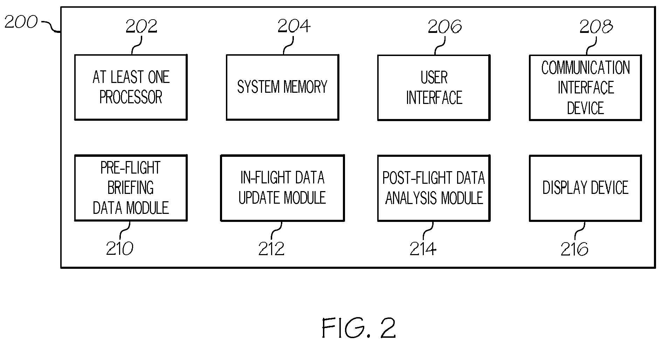

FIG. 2 is a functional block diagram of a computing device, in accordance with the disclosed embodiments. It should be noted that the computing device 200 can be implemented with the computing device 102 depicted in FIG. 1. In this regard, the computing device 200 shows certain elements and components of the computing device 200 in more detail.

The computing device 200 generally includes, without limitation: at least one processor 202; system memory 204; a user interface 206; a communication interface device 208; a pre-flight briefing data module 210; an in-flight data update module 212; a post-flight data analysis module 214; and a display device 216. These elements and features of the computing device 200 may be operatively associated with one another, coupled to one another, or otherwise configured to cooperate with one another as needed to support the desired functionality - in particular, obtaining and identifying Key Performance Indicators (KPIs) applicable to a particular flight plan, and providing data to the flight crew that is based on the applicable KPIs (e.g., potential fuel savings and KPI alerts), as described herein. For ease of illustration and clarity, the various physical, electrical, and logical couplings and interconnections for these elements and features are not depicted in FIG. 2. Moreover, it should be appreciated that embodiments of the computing device 200 will include other elements, modules, and features that cooperate to support the desired functionality. For simplicity, FIG. 2 only depicts certain elements that relate to the techniques described in more detail below.

The at least one processor 202 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 202 may be realized as one or more microprocessors, controllers, microcontrollers, or state machines. Moreover, the at least one processor 202 may be implemented as a combination of computing devices, e.g., a combination of digital signal processors and microprocessors, a plurality of microprocessors, one or more microprocessors in conjunction with a digital signal processor core, or any other such configuration.

The at least one processor 202 is communicatively coupled to the system memory 204. The system memory 204 is configured to store any obtained or generated data associated with operational-efficiency Key Performance Indicators (KPIs), potential fuel savings calculations, configuration and setting of KPI alerts, and graphical elements associated with the KPI analysis and data system. The system memory 204 may be realized using any number of devices, components, or modules, as appropriate to the embodiment. Moreover, the computing device 200 could include system memory 204 integrated therein and/or a system memory 204 operatively coupled thereto, as appropriate to the particular embodiment. In practice, the system memory 204 could be realized as RAM memory, flash memory, EPROM memory, EEPROM memory, registers, a hard disk, a removable disk, or any other form of storage medium known in the art. In certain embodiments, the system memory 204 includes a hard disk, which may also be used to support functions of the computing device 200. The system memory 204 can be coupled to the at least one processor 202 such that the at least one processor 202 can read information from, and write information to, the system memory 204. In the alternative, the system memory 204 may be integral to the at least one processor 202. As an example, the at least one processor 202 and the system memory 204 may reside in a suitably designed application-specific integrated circuit (ASIC).

The user interface 206 may include or cooperate with various features to allow a user to interact with the computing device 200. Accordingly, the user interface 206 may include various human-to-machine interfaces, e.g., a keypad, keys, a keyboard, buttons, switches, knobs, a touchpad, a joystick, a pointing device, a virtual writing tablet, a touch screen, a microphone, or any device, component, or function that enables the user to select options, input information, or otherwise control the operation of the computing device 200. For example, the user interface 206 could be manipulated by an operator to provide user selections to enable or disable particular KPIs, or to request KPI information applicable to a current flight plan and/or dynamically updated fuel savings or KPI applicability data during flight, as described herein.

In certain embodiments, the user interface 206 may include or cooperate with various features to allow a user to interact with the computing device 200 via graphical elements rendered on a display element (e.g., the display device 216). Accordingly, the user interface 206 may initiate the creation, maintenance, and presentation of a graphical user interface (GUI). In certain embodiments, the display device 216 implements touch-sensitive technology for purposes of interacting with the GUI. Thus, a user can manipulate the GUI by moving a cursor symbol rendered on the display device 216, or by physically interacting with the display device 216 itself for recognition and interpretation, via the user interface 206.

The communication interface device 208 is suitably configured to communicate data between the computing device 200 and one or more remote servers and one or more avionics systems onboard an aircraft. The communication interface device 208 may transmit and receive communications over a wireless local area network (WLAN), the Internet, a satellite uplink/downlink, a cellular network, a broadband network, a wide area network, or the like. As described in more detail below, data received by the communication interface device 208 may include, without limitation: flight plan data, Key Performance Indicator (KPI) data, weather data, aircraft parameter data for a particular type of aircraft, fuel cost data, aircraft maintenance data, airport gate delay data, aircraft emissions data, and other data compatible with the computing device 200. Data provided by the communication interface device 208 may include, without limitation, requests for data associated with KPI analysis, operational-efficiency analysis (e.g., fuel savings, aircraft maintenance, gate delays, aircraft emissions), aircraft onboard alerts associated with KPI analysis, and the like.

The pre-flight briefing data module 210 is configured to provide operational-efficiency data onboard the aircraft prior to flight of the aircraft. Operational-efficiency data may include fuel savings data and other operational-efficiency parameter data (e.g., emissions data, aircraft maintenance data, gate delay data) associated with Key Performance Indicator (KPI) applicability. The pre-flight briefing data module 210 is configured to determine applicability of KPIs to a current flight plan, based on obtained pre-flight briefing data that is associated with the current flight plan, flight plan data, weather data, Notice to Airmen (NOTAM) data, and Air Traffic Control (ATC) communication data. In addition to the KPI applicability information, the pre-flight data also includes various dashboards from historical data associated with the city pair (i.e., airport pair) being flown during execution of the current flight plan. Such historical dashboard data may include, without limitation: departure and arrival profiles, taxi and/or trip fuel information, time of departure, time of arrival, or the like. The flight crew is provided with options to filter the historical dashboard data, based on one or more categories (e.g., the weight of the aircraft, the time of day, and season of the flight), wherein the filtering is used to configure the dashboard to the conditions closest to the current flight. When a particular KPI is applicable to the current flight plan, the pre-flight briefing data module 210 is configured to calculate fuel savings associated with adherence to the particular KPI and to set alerts associated with adherence to the particular KPI. Thus, the pre-flight briefing data module 210 determines KPI applicability and determines operational-efficiency (e.g., fuel-efficiency) associated with applicable KPI compliance.

The in-flight data update module 212 is configured to provide operational-efficiency data onboard the aircraft during the flight of the aircraft. The in-flight data update module 212 dynamically updates KPI analysis throughout the flight, by (1) determining applicability of one or more KPIs, (2) calculating fuel savings associated with adherence to the particular KPI, and (3) setting alerts associated with adherence to the particular KPI. The in-flight data update module 212 continuously monitors avionics data, aircraft parameter data, aircraft state data (e.g., position, altitude, speed), ATC communication data, weather data, NOTAM data, and flight plan data to continuously and dynamically determine the applicability of particular KPIs during flight.

The post-flight data analysis module 214 is configured to provide operational-efficiency data onboard the aircraft after the flight of the aircraft. Such post-flight, operational-efficiency data may be in the form of historical KPI compliance data, current KPI compliance data, and identified trends, discrepancies, and other comparison data obtained by comparing the current KPI compliance data with the historical KPI compliance data. The post-flight data analysis module 214 performs a historical analysis of post-flight, KPI compliance data generated and stored during a flight that has already been completed (i.e., a completed flight plan) by comparing the KPI compliance data to a set of historical KPI compliance data obtained from a plurality of past flights.

In practice, the pre-flight briefing data module 210, the in-flight data update module 212, and/or the post-flight data analysis module 214 may be implemented with (or cooperate with) the at least one processor 202 to perform at least some of the functions and operations described in more detail herein. In this regard, the pre-flight briefing data module 210, the in-flight data update module 212, and/or the post-flight data analysis module 214 may be realized as suitably written processing logic, application program code, or the like.

The display device 216 is configured to display various icons, text, and/or graphical elements associated with operational-efficiency Key Performance Indicator (KPI) analysis. In an exemplary embodiment, the display device 216 and the user interface 206 are communicatively coupled to the at least one processor 202. The at least one processor 202, the user interface 206, and the display device 216 are cooperatively configured to display, render, or otherwise convey one or more graphical representations or images associated with KPI analysis and KPI-associated alerts on the display device 216, as described in greater detail below. In an exemplary embodiment, the display device 216 is realized as an electronic display configured to graphically display KPI analysis data and KPI-associated alerts, as described herein. In some embodiments, the computing device 200 is an integrated computer system onboard an aircraft, and the display device 216 is located within a cockpit of the aircraft, and is thus implemented as an aircraft display. In other embodiments, the display device 216 is implemented as a display screen of a standalone, personal computing device (e.g., laptop computer, tablet computer). It will be appreciated that although the display device 216 may be implemented using a single display, certain embodiments may use additional displays (i.e., a plurality of displays) to accomplish the functionality of the display device 216 described herein.

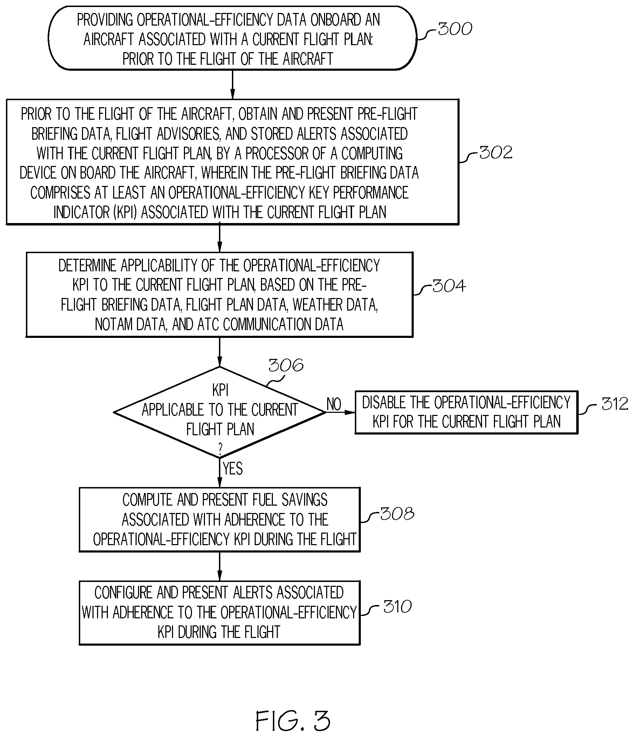

FIGS. 3-5 are flow charts describing processes for providing operational-efficiency data onboard an aircraft in three differing scenarios: (1) prior to flight of the aircraft; (2) during flight of the aircraft; and (3) after flight of the aircraft. It should be appreciated that operational-efficiency data may include any data associated with improvements to fuel-efficiency of the aircraft, and reductions in aircraft maintenance, delays, and carbon dioxide emissions.

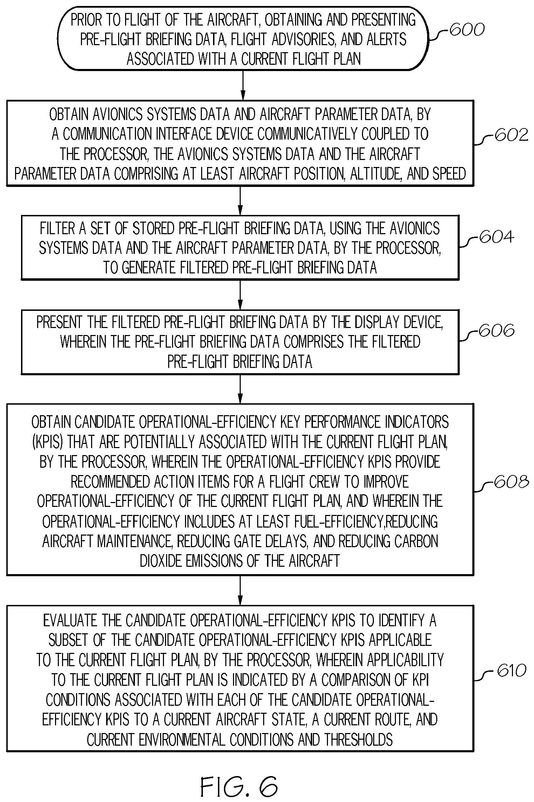

FIG. 3 is a flow chart that illustrates an embodiment of a process 300 for providing operational-efficiency data onboard an aircraft associated with a current flight plan prior to the flight of the aircraft. First, prior to the flight of the aircraft, the process 300 obtains and presents pre-flight briefing data, flight advisories, and stored alerts associated with the current flight plan, by a processor of a computing device onboard the aircraft (step 302). One suitable methodology for obtaining and presenting pre-flight briefing data, flight advisories, and stored alerts associated with the current flight plan is described below with reference to FIG. 6.

Pre-flight briefing data may include any data presented to, and used by, the flight crew for formulating an action plan to complete a current flight plan. The pre-flight briefing data comprises at least one operational-efficiency Key Performance Indicator (KPI) associated with the current flight plan. In addition to the KPI information associated with the current flight plan, the pre-flight data also includes various dashboards from historical data associated with the city pair (i.e., airport pair) being flown during execution of the current flight plan. Such historical dashboard data may include, without limitation: departure and arrival profiles, taxi and/or trip fuel information, time of departure, time of arrival, or the like. The flight crew is provided with options to filter the historical dashboard data, based on one or more categories (e.g., the weight of the aircraft, the time of day, and season of the flight), wherein the filtering is used to configure the dashboard to the conditions closest to the current flight.

A KPI provides recommended action items for a flight crew to improve operational-efficiency for the current flight plan. Operational-efficiency indicates an increased level of effectiveness (above a baseline typical level of effectiveness) for KPI parameters, which may include at least increased fuel-efficiency (e.g., lower fuel requirements resulting in reduced fuel costs), reduced aircraft maintenance requirements, reduced gate delays, and reduced carbon dioxide emissions. Thus, when the recommended action items of the operational-efficiency KPI are completed by the flight crew, the operational-efficiency of the aircraft is increased. Examples of operational-efficiency KPIs may include, without limitation: delayed engine start; reduced engine taxi (i.e., engine out or single engine); optimum Standard Instrument Departure (SID); reduced flaps takeoff; optimum point for clean configuration after takeoff; acceleration altitude reduction; early/delayed landing gear retraction; change of cruise altitude; direct request and utilization; optimum Standard Arrival (STAR); reduced flap landing; optimum point for landing configuration; and idle reverse.

The process 300 then determines applicability of the operational-efficiency KPI to the current flight plan, based on the pre-flight briefing data, flight plan data, weather data, Notices to Airmen (NOTAM) data, and Air Traffic Control (ATC) communication data (step 304). The process 300 determines applicability of the KPI to the current flight plan by determining whether the KPI is valid, pertinent, appropriate, and/or useful to the current circumstances of the flight. The process 300 determines applicability dynamically, in real-time, and continuously throughout the flight (i.e., throughout completion of the flight plan). Thus, a KPI that is deemed applicable to the current flight plan when the KPI still applies to the flight plan and has not been rendered irrelevant or invalid by changing flight conditions and circumstances.

When the operational-efficiency KPI is not applicable to the current flight plan (the "No" branch of 306), the process 300 disables the operational-efficiency KPI for the current flight plan (step 312). In some embodiments, the process 300 disables the KPI automatically, after determining that the KPI is not applicable to the current flight plan. In other embodiments, however, the process 300 receives a user input selection to disable the KPI (based on an evaluation and decision input by a flight crew member), and disables the user-selected KPI in response to the user input selection. Here, the process 300 presents a list of KPIs and a graphical element (e.g., a button, a checkbox, a user-selectable radio button) associated with each of the KPIs to enable and/or disable one particular KPI.

Generally, when the KPI is disabled during the flight, (automatically disabled by the process or manually disabled by the user), the KPI is not monitored for compliance and associated alerts are not provided to the crew. However, when the process 300 receives user input disabling a particular KPI, the process 300 requests user-provided reasons for the disabling. In certain embodiments, the process 300 may provide a pre-set list of reasons associated to the KPI. In other embodiments, the process 300 provides a data entry form configured to receive user input text associated with the manual disabling of the KPI. Post flight, a disabled KPI is disregarded from a compliance report for the current flight plan. A list of disabled KPIs, and associated reasons for disabling the KPIs, is provided in a separate report for analysis and refinement of the KPIs.

However, when the operational-efficiency KPI is applicable to the current flight plan (the "Yes" branch of 306), the process 300 computes and presents fuel savings associated with adherence to the operational-efficiency KPI during the flight (step 308). When the flight crew completes action items related to the recommendations provided by the KPI, the aircraft completes the flight in a more fuel-efficient and operationally-efficient manner. Here, the process 300 determines: (1) a first fuel cost associated with continuing the flight with no change to the KPI action items or recommendations, and (2) a second fuel cost associated with completing the action items and recommendations provided by the KPI. The process 300 computes the difference between the first fuel cost and the second fuel cost, and presents the difference as the fuel savings associated with adherence to the operational-efficiency KPI.

The process 300 also configures and presents alerts associated with adherence to the operational-efficiency KPI during the flight (step 310). Here, the process 300 presents alerts to notify the flight crew at times when recommended action items provided by the operational-efficiency KPI should be completed by the flight crew. Configured and presented alerts may include, without limitation, audio alerts (e.g., alarms, audio tones or chimes, voice alerts that include spoken words or phrases), visual alerts (e.g., flashing lights, text and graphical elements presented by a computer display), or a combination of audio alerts and visual alerts.

In one exemplary embodiment, the operational-efficiency KPI may be a Single Engine Out Taxi Out KPI. In this embodiment, the process 300 may configure and present the following alerts, without limitation: (1) engine number to be started, by the flight crew, for Taxi Out operation; (2) a time when the engine should be started by the flight crew; (3) a time when the other engine should be started during taxi, by the flight crew; and (4) a time when the auxiliary power unit (APU) should be deactivated by the flight crew.

Further, the recommended action items for the KPIs are defined during runtime of the process 300, based on various aircraft parameter data, planned flight profile, airport configuration, runway configuration, wind conditions, weather conditions, air traffic information, and the like. Once defined, the process 300 identifies and configures alerts for the recommended action items such that the flight crew is notified of each recommended action item at an appropriate time for completion or execution of the recommended action item.

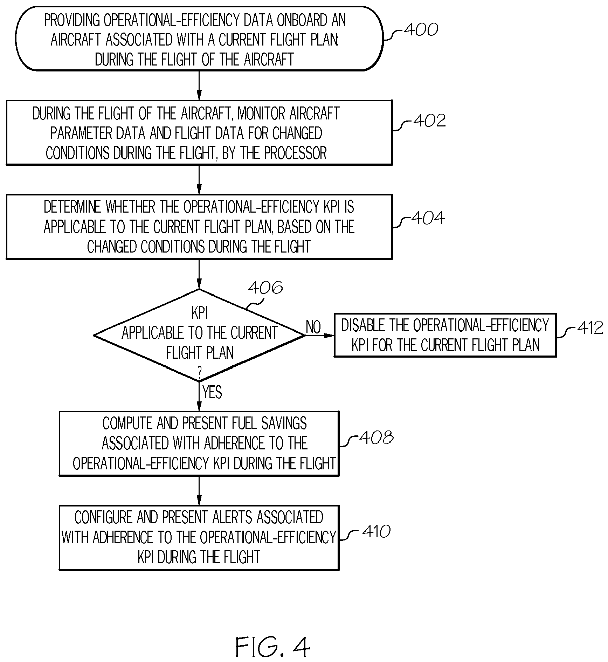

FIG. 4 is a flow chart that illustrates an embodiment of a process 400 for providing operational-efficiency data onboard an aircraft associated with a current flight plan during the flight of the aircraft. First, during the flight of the aircraft, the process 400 monitors aircraft parameter data and flight data for changed conditions during the flight, by the processor (step 402). Aircraft parameter data may include, without limitation: aircraft position, aircraft speed, aircraft altitude, or the like. Aircraft parameter data may also include the pre-flight briefing data, flight plan data, weather data, Notices to Airmen (NOTAM) data, and Air Traffic Control (ATC) communication data. The process 400 monitors the aircraft-specific information (e.g., position, speed, altitude) and flight plan-specific information (e.g., pre-flight briefing data, the current flight plan, weather data associated with flight plan, NOTAMs associated with flight plan, and messages received from ATC) to identify changed conditions. For example, weather data in a particular location or waypoint along the current flight plan may change during the flight. As another example, NOTAM data may change during the flight. As a third example, the flight plan may be changed during the flight, and the changes to the flight plan may be transmitted to the flight crew onboard the aircraft via ATC communications.

The process 400 determines whether the operational-efficiency KPI is applicable to the current flight plan, based on the changed conditions during the flight (step 404). Here, the process 400 compares the changed conditions to the recommended action items provided by the operational-efficiency KPI, and determines whether the changed conditions render the operational-efficiency KPI inapplicable to the current flight plan. For example, the current flight plan may recommend flying at a particular altitude when the aircraft is physically located at a particular location (e.g., Location X). However, Location X may be removed from the current flight plan, or in other words, the condition including Location X as part of the current flight plan may be changed. In this example, after the condition is changed (i.e., after Location X is removed from the current flight plan), the aircraft is unable to fly at the designated altitude recommended by the KPI. Thus, the KPI is no longer applicable to the current flight plan, based on the changed conditions.

When the KPI is not applicable to the flight plan (the "No" branch of 406), then the process 400 disables the operational-efficiency KPI for the current flight plan (step 412). As described previously with regard to FIG. 3, the process 400 may disable the KPI automatically, after determining that the KPI is not applicable to the current flight plan, or the process 400 may disable the KPI in response to a user input selection.

However, when the KPI is applicable to the flight plan (the "Yes" branch of 406), then the process 400 computes and presents fuel savings associated with adherence to the operational-efficiency KPI during the flight (step 408). Like the pre-flight process for providing operational-efficiency data onboard the aircraft described previously with regard to FIG. 3, the process 400 identifies applicable KPIs and then determines how the applicable KPIs will affect fuel-efficiency (and operational-efficiency) during completion of the flight according to the current flight plan. When the flight crew completes action items related to the recommendations provided by the KPI, the aircraft completes the flight in a more fuel-efficient and operationally-efficient manner. Here, the process 400 determines: (1) a first fuel cost associated with continuing the flight with no change to the KPI action items or recommendations, and (2) a second fuel cost associated with completing the action items and recommendations provided by the KPI. The process 400 computes the difference between the first fuel cost and the second fuel cost, and presents the difference as the fuel savings associated with adherence to the operational-efficiency KPI.

Like the pre-flight process described previously with regard to FIG. 3, the process 400 configures and presents alerts associated with adherence to the operational-efficiency KPI during the flight (step 410). During flight, the process 400 configures and presents alerts in a similar manner to that described previously with regard to FIG. 3. The process 400 presents alerts to notify the flight crew at times when recommended action items provided by the operational-efficiency KPI should be completed by the flight crew. Configured and presented alerts may include, without limitation, audio alerts (e.g., alarms, audio tones or chimes, voice alerts that include spoken words or phrases), visual alerts (e.g., flashing lights, text and graphical elements presented by a computer display), or a combination of audio alerts and visual alerts.

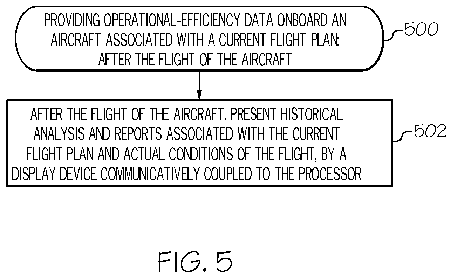

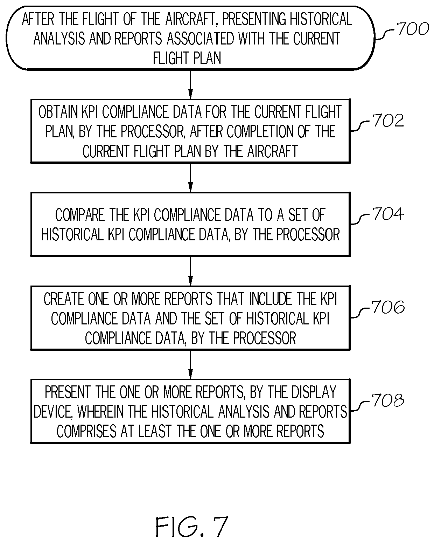

FIG. 5 is a flow chart that illustrates an embodiment of a process 500 for providing operational-efficiency data onboard an aircraft associated with a current flight plan after the flight of the aircraft. After the flight of the aircraft, the process 500 presents historical analysis and reports associated with the current flight plan and actual conditions of the flight, by a display device communicatively coupled to the processor (step 502). One suitable methodology for presenting historical analysis and reports is described below with reference to FIG. 7. Here, the process 500 provides reports associated with operational-efficiency Key Performance Indicator (KPI) applicability to the current flight plan and flight crew compliance with the applicable operational-efficiency KPIs for the current flight plan. Historical analysis and reports are presented to provide insight regarding operational-efficiency of the aircraft during completion of the current flight plan, such as fuel-efficiency, aircraft maintenance data, aircraft emissions, and other operational-efficiency parameters affected by KPI compliance during the course of the flight.

FIG. 6 is a flow chart that illustrates an embodiment of a process 600 for obtaining and presenting pre-flight briefing data, flight advisories, and alerts associated with a current flight plan, prior to the flight of the aircraft. It should be appreciated that the process 600 described in FIG. 6 represents one embodiment of step 302 described above in the discussion of FIG. 3, including additional detail. First, the process 600 obtains avionics systems data and aircraft parameter data, by a communication interface device communicatively coupled to the processor (step 602). The avionics systems data and the aircraft parameter data comprise at least aircraft position, altitude, and speed.

The process 600 then filters a set of stored pre-flight briefing data, using the avionics systems data and the aircraft parameter data, by the processor, to generate filtered pre-flight briefing data (step 604). The filtered pre-flight briefing data is associated with a current flight plan, and is filtered from a database of pre-flight briefing data that is applicable to a larger superset of pre-flight briefing data associated with a plurality of flight plans. The process 600 also presents the filtered pre-flight briefing data by the display device, wherein the pre-flight briefing data comprises the filtered pre-flight briefing data (step 606).

The process 600 also obtains candidate operational-efficiency Key Performance Indicators (KPIs) that are potentially associated with the current flight plan, by the processor (step 608). The operational-efficiency KPIs provide recommended action items for a flight crew to complete to improve operational-efficiency of the current flight plan. For example, improving the operational-efficiency may include improving aircraft fuel-efficiency, reducing aircraft maintenance, reducing gate delays, and reducing carbon dioxide emissions of the aircraft. The pre-flight briefing data generally includes a plurality of obtained KPIs that may or may not be applicable to the current flight plan. Applicability to the current flight plan depends on flight plan data and avionics systems data and aircraft parameter data obtained in step 602.

The process 600 then evaluates the candidate operational-efficiency KPIs to identify a subset of the candidate operational-efficiency KPIs applicable to the current flight plan, by the processor (step 610). Applicability to the current flight plan is indicated by a comparison of KPI conditions associated with each of the candidate operational-efficiency KPIs to a current aircraft state, a current route for the current flight plan, and current environmental conditions and thresholds.

FIG. 7 is a flow chart that illustrates an embodiment of a process 700 for presenting historical analysis and reports associated with the current flight plan, after the flight of the aircraft. It should be appreciated that the process 700 described in FIG. 7 represents one embodiment of step 502 described above in the discussion of FIG. 5, including additional detail.

First, the process 700 obtains KPI compliance data for the current flight plan, by the processor, after completion of the current flight plan by the aircraft (step 702). KPI compliance data is generally collected and stored, onboard the aircraft, during completion of the current flight plan. KPI compliance data describes KPIs that are applicable to the current flight plan, and KPI adherence data for the current flight plan (i.e., whether or not the flight crew completed the recommended action items provided by the applicable KPIs). KPI compliance data may include all KPI compliance data for the current flight plan, or may be a subset of the total KPI compliance data for the current flight plan. The subset of the total KPI compliance data may include KPIs related to particular aircraft parameters, or one particular KPI.

Next, the process 700 compares the KPI compliance data to a set of historical KPI compliance data, by the processor (step 704). Historical KPI compliance data may include any KPI compliance data associated with any completed flight plan, and generally includes KPI compliance data associated with a plurality of completed flight plans. Here, the process 700 compares the KPI compliance data (which may include a full set of KPI compliance data for the current flight plan, or a partial set of KPI compliance data for the current flight plan) to the set of historical KPI compliance data (which generally includes KPI compliance data for a plurality of flights) to identify discrepancies, trends, and other comparison data. The process 700 then creates one or more reports that include the KPI compliance data and the set of historical KPI compliance data, by the processor (step 706). The one or more reports may include the comparison data (e.g., the identified discrepancies and trends) and/or visual representations of the comparison data (e.g., charts, graphs).

The various tasks performed in connection with processes 300-700 may be performed by software, hardware, firmware, or any combination thereof. For illustrative purposes, the preceding descriptions of processes 300-700 may refer to elements mentioned above in connection with FIGS. 1-2. In practice, portions of processes 300-700 may be performed by different elements of the described system. It should be appreciated that processes 300-700 may include any number of additional or alternative tasks, the tasks shown in FIGS. 3-7 need not be performed in the illustrated order, and processes 300-700 may be incorporated into a more comprehensive procedure or process having additional functionality not described in detail herein. Moreover, one or more of the tasks shown in FIGS. 3-7 could be omitted from embodiments of the processes 300-700 as long as the intended overall functionality remains intact.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown in FIG. 2 depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for providing operational-efficiency data onboard an aircraft associated with a current flight plan, the method comprising:
prior to flight of the aircraft using the current flight plan,
obtaining and presenting pre-flight briefing data, flight advisories, and stored alerts associated with the current flight plan, by a processor of a computing device onboard the aircraft, wherein the pre-flight briefing data comprises at least an operational-efficiency Key Performance Indicator (KPI) associated with the current flight plan, wherein the operational-efficiency KPI provides recommended action items for a flight crew to improve operational-efficiency for the current flight plan, and wherein the operational-efficiency includes at least fuel-efficiency, reducing aircraft maintenance, reducing gate delays, and reducing carbon dioxide emissions;
determining applicability of the operational-efficiency KPI to the current flight plan, based on the pre-flight briefing data, flight plan data, weather data, Notice to Airmen (NOTAM) data, and Air Traffic Control (ATC) communication data;
when the operational-efficiency KPI is applicable to the current flight plan,
computing and presenting fuel savings associated with adherence to the operational-efficiency KPI during the flight; and
configuring and presenting alerts associated with adherence to the operational-efficiency KPI during the flight.

2. The method of Claim 1, further comprising:
when the operational-efficiency KPI is not applicable to the current flight plan, disabling the operational-efficiency KPI for the current flight plan.

3. The method of Claim 1, further comprising:
when the operational-efficiency KPI is not applicable to the current flight plan, receiving a user input indication to disable the operational-efficiency KPI; and in response to the user input indication, disabling the operational-efficiency KPI for the current flight plan.

4. The method of Claim 1, further comprising:
during the flight of the aircraft using the current flight plan,
monitoring aircraft parameter data and flight data for changed conditions during the flight, by the processor;
determining whether the operational-efficiency KPI is applicable to the current flight plan, based on the changed conditions during the flight; and
when the operational-efficiency KPI is applicable to the current flight plan,
computing and presenting fuel savings associated with adherence to the operational-efficiency KPI during the flight; and
configuring and presenting alerts associated with adherence to the operational-efficiency KPI during the flight.

5. The method of Claim 1, further comprising:
during the flight of the aircraft using the current flight plan,
continuously monitoring aircraft parameter data and flight data for changed conditions during the flight, by the processor;
continuously determining whether the operational-efficiency KPI is applicable to the current flight plan, based on the changed conditions during the flight; and
when the operational-efficiency KPI is applicable to the current flight plan,
continuously computing and presenting fuel savings associated with adherence to the operational-efficiency KPI during the flight; and
continuously configuring and presenting alerts associated with adherence to the operational-efficiency KPI during the flight.

6. The method of Claim 1, further comprising:
after the flight of the aircraft, presenting historical analysis and reports associated with the current flight plan and actual conditions of the flight, by a display device communicatively coupled to the processor.

7. The method of Claim 6, further comprising presenting historical analysis and reports associated with the current flight plan, by:
obtaining KPI compliance data for the current flight plan, by the processor, after completion of the current flight plan by the aircraft;
comparing the KPI compliance data to a set of historical KPI compliance data, by the processor;
creating one or more reports that include the KPI compliance data and the set of historical KPI compliance data, by the processor; and
presenting the one or more reports, by the display device, wherein the historical analysis and reports comprises at least the one or more reports.

8. The method of Claim 1, further comprising obtaining and presenting the pre-flight briefing data, flight advisories, and alerts associated with the current flight plan, by:
obtaining avionics systems data and aircraft parameter data, by a communication interface device communicatively coupled to the processor, the avionics systems data and the aircraft parameter data comprising at least aircraft position, altitude, and speed;
filtering a set of stored pre-flight briefing data associated with the current flight plan, using the avionics systems data and the aircraft parameter data, by the processor, to generate filtered pre-flight briefing data; and
presenting the filtered pre-flight briefing data by the display device, wherein the pre-flight briefing data comprises the filtered pre-flight briefing data, and wherein the filtered pre-flight briefing data comprises the operational-efficiency KPI.

9. The method of Claim 1, further comprising:
receiving user input data via a user interface communicatively coupled to the processor; and
configuring one or more types of user-configured alerts for the operational-efficiency KPI, by the processor, based on the user input data;
wherein presenting the alerts further comprises presenting the user-configured alerts.

10. A computing device onboard an aircraft associated with a current flight plan, comprising:
a system memory element configured to store a database of operational-efficiency Key Performance Indicators (KPIs) received from existing fuel-efficiency software;
a display device configured to present text and graphical elements for user viewing; and
at least one processor, communicatively coupled to the system memory element and the display device, the at least one processor configured to:
prior to flight of the aircraft using the current flight plan,
obtain and present pre-flight briefing data, flight advisories, and stored alerts associated with the current flight plan, wherein the pre-flight briefing data comprises at least an operational-efficiency Key Performance Indicator (KPI) associated with the current flight plan, wherein the operational-efficiency KPI provides recommended action items for a flight crew to improve operational-efficiency for the current flight plan, and wherein the operational-efficiency includes at least fuel-efficiency, reducing aircraft maintenance, reducing gate delays, and reducing carbon dioxide emissions;
determine applicability of the operational-efficiency KPI to the current flight plan, based on the pre-flight briefing data, flight plan data, weather data, Notice to Airmen (NOTAM) data, and Air Traffic Control (ATC) communication data;
when the operational-efficiency KPI is applicable to the current flight plan,
compute and present fuel savings associated with adherence to the operational-efficiency KPI during the flight; and
configure and present alerts associated with adherence to the operational-efficiency KPI during the flight.

11. The system of Claim 10, wherein, when the operational-efficiency KPI is not applicable to the current flight plan, the at least one processor is further configured to disable the operational-efficiency KPI for the current flight plan.

12. The system of Claim 10, further comprising a user interface configured to receive user input;
wherein, when the operational-efficiency KPI is not applicable to the current flight plan, the at least one processor is further configured to:
receive a user input indication to disable the operational-efficiency KPI, via the user interface; and
in response to the user input indication, disable the operational-efficiency KPI for the current flight plan.

13. The system of Claim 10, wherein the at least one processor is further configured to:
during the flight of the aircraft using the current flight plan,
monitor aircraft parameter data and flight data for changed conditions during the flight, by the processor;
determine whether the operational-efficiency KPI is applicable to the current flight plan, based on the changed conditions during the flight; and
when the operational-efficiency KPI is applicable to the current flight plan,
compute and present fuel savings associated with adherence to the operational-efficiency KPI during the flight; and
configure and present alerts associated with adherence to the operational-efficiency KPI during the flight.

14. The system of Claim 10, wherein the at least one processor is further configured to:
after the flight of the aircraft, present historical analysis and reports associated with the current flight plan and actual conditions of the flight, by a display device communicatively coupled to the processor.

15. The system of Claim 14, wherein the at least one processor is further configured to present historical analysis and reports associated with the current flight plan, by:
obtaining KPI compliance data for the current flight plan, by the processor, after completion of the current flight plan by the aircraft;
comparing the KPI compliance data to a set of historical KPI compliance data, by the processor;
creating one or more reports that include the KPI compliance data and the set of historical KPI compliance data, by the processor; and
presenting the one or more reports, by the display device, wherein the historical analysis and reports comprises at least the one or more reports.
